# EUROPÄISCHE PATENTSCHRIFT

(11) **EP 4 075 111 B1**
(45) Veröffentlichungstag und Bekanntmachung des Hinweises auf die Patenterteilung: **25.09.2024**
(21) Anmeldenummer: 22166638.1
(22) Anmeldetag: 05.04.2022
(51) Int. Cl.: G01J 5/00, G01J 5/02, G01J 5/0875, F23M 11/04, F23N 5/08, G01J 1/04, G01J 1/42, F23D 14/02, G01N 21/72

(54) **HEIZGERÄT MIT EINER OPTISCHEN SENSORANORDNUNG AN EINEM FENSTER ZUM VERBRENNUNGSRAUM**
HEATING DEVICE COMPRISING ARRANGEMENT OF AN OPTICAL SENSOR ON A WINDOW TO THE COMBUSTION CHAMBER OF A
APPAREIL DE CHAUFFAGE COMPRENANT UN MONTAGE D'UN CAPTEUR OPTIQUE SUR UNE FENÊTRE DE LA CHAMBRE DE COMBUSTION D'UN

(30) Priorität: 16.04.2021 DE 102021109578
(43) Veröffentlichungstag der Anmeldung: 19.10.2022
(73) Patentinhaber: Vaillant GmbH, 42859 Remscheid NRW (DE)
(72) Erfinder: Oerder, Bodo, 42897 Remscheid (DE); Wohlfeil, Arnold, 42799 Leichlingen (DE); Grabe, Jochen, 51688 Wipperfürth (DE); Staab, Fabian, 42283 Wuppertal (DE); Hopf, Matthias, 42855 Remscheid (DE); Schumacher, Michael, 51688 Wipperfürth (DE)
(74) Vertreter: Popp, Carsten

(56) Entgegenhaltungen:
- DE-A1- 102013 111 876
- DE-A1- 102014 108 290
- DE-A1- 102019 114 274
- JP-A- 2021 009 972

## Beschreibung

Die Erfindung betrifft Heizgerät mit einer Anordnung eines optischen Sensors an einem Fenster (Schauglas) zu einem Verbrennungsraum eines Heizgerätes, insbesondere zur Verbrennung von Wasserstoff enthaltendem Brenngas, bevorzugt mit einem Wasserstoffanteil größer 10%, insbesondere größer 50%, ganz bevorzugt größer 97%. Wasserstoff als Brenngas oder als Beimischung zu Brenngasen wird immer wichtiger, und es werden große Anstrengungen unternommen, neue oder auch existierende Heizgeräte für einen Betrieb damit zu ertüchtigen.

Dabei geht es nicht nur um große Anlagen, sondern auch um Wandgeräte zur Erwärmung von Wasser und generell um Heizgeräte für die Beheizung von Gebäuden und/oder die Bereitstellung von warmem Wasser. Wasserstoff unterscheidet sich bei seiner Verbrennung (mit Umgebungsluft) in mehreren Punkten von bisher verwendeten Brenngasen, insbesondere ist eine Wasserstofflamme für das menschliche Auge fast unsichtbar, strahlt weniger Wärme ab als mit kohlenstoffhaltigen Brennstoffen erzeugte Flammen, und Wasserstoffflammen benötigen zu ihrer Überwachung andere Messsysteme als andere Brennstoffe. Insbesondere liefern lonisationsmessungen keine zuverlässigen Signale bei hohen Anteilen von Wasserstoff im Brenngas. Die vorliegende Erfindung ist daher besonders, aber nicht nur anwendbar für Heizgeräte, die mit reinem Wasserstoff oder mit Brenngas, das Anteile an Wasserstoff enthält, betrieben werden.

Eine Verwendung von optischen Sensoren (für den sichtbaren, aber insbesondere auch für den Ultraviolett-Bereich des Lichtes) zur Flammenüberwachung und Regelung der Verbrennung unter Benutzung von optischen Filtern ist für Anwendungen bei Heizgeräten, die mit wasserstoffhaltigem Brenngas betrieben werden, schon beispielsweise aus der DE 10 2019 101 329 A1 bekannt. Auch die EP 2 223 016 B1, die US 5 829 962 A und die DE19 509 704 A1 beschäftigen sich ausführlich mit optischen Messsystemen für die Flammenüberwachung.

Die DE 10 2013 111 876 A1 offenbart eine Flammensensorvorrichtung und eine Kabelanordnungsvorrichtung zur Verwendung beim Erfassen von Eigenschaften einer Flamme in einer Brennkammer einer öl- oder gasbefeuerten Turbine. Die Flammensensorvorrichtung kann an einem Sichtrohr, welches vor einer Öffnung der Brennkammer positioniert ist, angeordnet werden. Die Flammensensorvorrichtung umfasst weiter eine Kabelanordnung mit diversen Dichtungen, die vorgesehen sind, um Nässe, Gas und Verunreinigungen daran zu hindern, durch die Kabelarmaturenöffnung hindurchzugelangen.

Die DE 10 2014 108 290 A1 betrifft ein optisches Überwachungssystem für eine Gasturbinenmaschine. Dieses umfasst eine optische Verbindungseinrichtung mit einem ersten axialen Ende und einem zweiten axialen Ende, wobei das erste axiale Ende optisch mit einem Sichtfenster einer Brennkammer gekoppelt und zum Erhalten des Bildes aus dem Sichtfenster eingerichtet ist. Die optische Verbindungseinrichtung weist ein Substrat mit mehreren hohlen Kanälen auf, wovon sich jeder von dem ersten axialen Ende zu dem zweiten axialen Ende erstreckt, und jeder hohle Kanal eine auf einer Innenoberfläche des hohlen Kanals angeordnete reflektierende Beschichtung enthält, um die Übertragung eines entsprechenden Teils des Bildes zu ermöglichen. Damit soll die innerhalb der Brennkammer emittierte elektromagnetische Strahlung mit ausreichender Intensität und vernachlässigbarer Störung einer Detektoranordnung zugeführt werden.

Der konstruktiven Anbindung der optischen Sensorik wird bisher wenig Aufmerksamkeit geschenkt. Die optische Sensorik wird durch eine einfache Halterung so zur Flamme im Verbrennungsraum ausgerichtet, dass die Sensorik diese Flamme vermessen kann. Hierbei hat die Halterung lediglich konstruktive Anforderungen zu erfüllen. Zudem muss das Licht aus der Brennkammer austreten können, um optisch erfasst werden zu können. In einem Gehäuse des Verbrennungsraumes, insbesondere in einer Brennertür neben einem Brenner, ist hierzu ein Fenster eingearbeitet. So kann der optische Sensor das Licht der Verbrennung erfassen.

Es wurde erkannt, dass die optische Auswertung einer Wasserstoffverbrennung dabei einem Konflikt unterliegt. Je näher sich die Sensorik an der Flamme und dem Verbrennungsraum befindet, desto deutlicher ist das daraus resultierende Flammensignal. Aber damit ist auch die höhere Einwirkung der Wärme der Verbrennung verbunden. Je nach Sensitivität des Sensors kann die Entfernung zur Flamme vergrößert werden. Falls eine ausreichende Sensitivität für einen zur Temperaturbegrenzung genügenden Abstand nicht verfügbar ist, kann eine zu hohe Wärmeeinwirkung auf die Sensorik durch entsprechende Kühlung des Sensors reduziert werden. In diesem Fall wird die Wärme durch einen Luftstrom reduziert, der den Sensor umspült. Die Verwendung und Luftkühlung von optischen Sensoren mit Schauglas in der Brennkammer sind aber ebenfalls mit Herausforderungen versehen: Einerseits können durch eine Luftkühlung des Sensors Verschmutzungen der Optik des Sensors auftreten. Es können sich Staubpartikel auf der Optik festsetzen, die das Lichtsignal reduzieren. Andererseits können sich durch die Luftkühlung des Sensors Verschmutzungen auch auf dem Fenster ablagern. Schließlich können Probleme durch zu hohe Wärmeübertragung auf den Sensor auch durch Wärmeleitung seiner Halterung entstehen.

Aufgabe der vorliegenden Erfindung ist es, die mit Bezug auf den Stand der Technik genannten Probleme zumindest teilweise zu lösen. Insbesondere soll Heizgerät mit einer Sensoranordnung zur Beobachtung von Flammen in einem Verbrennungsraum geschaffen werden, die weitgehend gegen Verschmutzungen geschützt ist, wobei der Sensor genügend Licht für eine sichere Flammenbeobachtung erhält und trotzdem zuverlässig auf einer für ihn zulässigen Betriebstemperatur gehalten werden kann.

Zur Lösung dieser Aufgabe dienen Heizgeräte mit einer Anordnung eines optischen Sensors gemäß den unabhängigen Ansprüchen. Vorteilhafte Ausgestaltungen und Weiterbildungen der Erfindung sind in den abhängigen Ansprüchen angegeben. Die Beschreibung, insbesondere im Zusammenhang mit der Zeichnung, veranschaulicht die Erfindung und gibt weitere Ausführungsbeispiele an.

Dazu trägt eine Anordnung eines optischen Sensors außen an einem in einem Gehäuse eines Verbrennungsraumes eines Heizgerätes angeordneten Fenster zu dem Verbrennungsraum bei, wobei der Sensor mit Abstand von dem Fenster angeordnet ist und zwischen Fenster und Sensor ein Tubus vorhanden ist, durch den optische Strahlen vom Fenster zum Sensor gelangen können.

Obwohl es aus optischen Gründen (es gibt in dem Bereich des Sensors praktisch keine störende optische Strahlung) nicht erforderlich ist, wird doch ein schützendes Bauteil, nämlich der Tubus um den optischen Strahlenweg angeordnet. Ein Tubus ist insbesondere ein Rohrstück (Hohlzylinder) mit mechanisch stabilen Wänden, wobei im vorliegenden Fall nicht zwingend ein runder Querschnitt erforderlich ist. Das Fenster kann Teil des Verbrennungsraumes des Heizgerätes sein, beispielsweise nach Art einer Strahlung bzw. Licht durchlassenden Scheibe. Der Abstand zwischen Sensor und Fenster vermeidet einen direkten (wärmeleitenden) Kontakt der beiden Bauteile. Der Abstand kann 2 cm bis 20 cm betragen, bevorzugt 5 bis 15 cm [Zentimeter]. Der Tubus kann sich über einen Zwischenraum zwischen Sensor und Fenster erstrecken und/oder diesen (radial) außen begrenzen. Es ist möglich, dass der Tubus mit dem Fenster und/oder dem Sensor (direkt) in Kontakt ist. Es ist möglich, dass der Tubus mindestens einen Strahlenkanal bildet oder zumindest teilweise begrenzt, in dem die optische Strahlung hindurchtritt bzw. hindurch geleitet wird. Es ist möglich, dass mehrere Tuben vorgesehen sind, wobei diese axial und/oder radial zueinander versetzt angeordnet sein können.

Der Tubus liegt mit einem Einlassende (im Wesentlichen) dichtend an dem Fenster an, beispielsweise aufgrund eines umlaufenden und/oder unmittelbaren Kontakts. Auf diese Weise können sich keine oder weniger Verschmutzungen auf dem Fenster ablagern, was die Lebensdauer (bzw. die Zeit zwischen Wartungen der Sensorik) erhöht. Eine Abdichtung kann einerseits durch eine (wärmebeständige) Dichtung erreicht werden, oder durch einen nur sehr kleinen Spalt (auch in der Art einer Labyrinth-Dichtung) von z. B. 0,1 bis 2 mm [Millimeter]. Dabei soll sichergestellt sein, dass Wärmedehnungen beteiligter Bauteile nicht behindert werden.

Der Sensor ist in einem Auslassende des Tubus angeordnet, wird also insbesondere von bzw. in dem Tubus getragen. So kann der Sensor ohne sonstige Halterung genau in einer gewünschten Position relativ zu dem Fenster und/oder dem Tubus angeordnet werden, und nur der Tubus wird extern gehaltert. Durch den Sensor und das Fenster kann der Tubus an beiden Enden praktisch luftdicht verschlossen sein, was das Eindringen von Staub und anderen Verschmutzungen reduziert oder verhindert. Besonders bevorzugt ist der Tubus in oder an einer Luftansaugleitung mittels einer Tubushalterung gehaltert. Jedes mit Brenngas und Luft betriebene Heizgerät hat eine Luftansaugleitung, die oft auch in dem Bereich verläuft (oder verlaufen kann), wo auch der Sensor angeordnet ist bzw. werden kann. Da die Luftansaugleitung etwa Umgebungstemperatur hat, eignet sie sich besonders für die Halterung eines Tubus mit Sensor.

Ganz besonders bevorzugt ist der Tubus zumindest in einem Teilbereich außen von Luft umströmbar. Dazu verläuft der Tubus insbesondere im Wesentlichen quer durch die Luftansaugleitung, wodurch sich gleichzeitig eine einfache Art der Halterung des Tubus ergibt. Eine besondere Abdichtung ist dabei nicht erforderlich, weil es nicht darauf ankommt, wo genau die Ansaugleitung Luft ansaugt. Nur muss sie einen genügenden Querschnitt aufweisen, damit der Tubus zwar von Luft umströmt wird, nicht aber die Ansaugung behindert. Bei Bedarf kann der Tubus auch Kühlstrukturen nach Art eines Kühlkörpers aufweisen.

Wenn der Sensor gekühlt wird, ist gemäß einem ersten Aspekt der Erfindung vorgesehen, dass der Tubus zumindest in einem sensornahen Bereich gut wärmeleitend und wärmeleitend mit dem Sensor verbunden ist. Ein "gut" wärmeleitender Bereich liegt insbesondere dann vor, wenn das Material eine Wärmeleitfähigkeit (bei 20°C) von zumindest 40 W/(mK) hat. In einem solchen Fall ist ein Metall besonders geeignet als Material für den sensornahen Bereich. Es können aber auch gut wärmeleitende Kunststoffe eingesetzt werden. Da sich das Fenster beim Betrieb des Heizgerätes auf relativ hoher Temperatur befinden kann, ist weiter vorgesehen, dass der Tubus zumindest in einem fensternahen Bereich schlecht wärmeleitend ist. Hier kommen keramische Werkstoffe oder hitzebeständige Kunststoffe in Betracht (die sich zudem gut mit für andere Teile des Tubus verwendeten Materialien verbinden lassen sollten).

Moderne Materialien, die insbesondere auch mit 3D-Druckern hergestellt werden können, erlauben auch eine erfindungsgemäße Ausbildung nach einem zweiten Aspekt, bei der der Tubus in radialer Richtung besser wärmeleitend ist als in axialer Richtung. Dadurch leitet der Tubus kaum Wärme vom Fenster zum Sensor, jedoch sehr wohl Wärme vom Sensor an die Umgebung oder die angesaugte Luft.

So etwas lässt sich insbesondere verwirklichen, wenn der Tubus zumindest in Teilbereichen aus abwechselnden kreisringförmigen Scheiben mit einem Material mit einer größeren und geringeren Wärmeleitfähigkeit aufgebaut ist, beispielsweise abwechselnd aus Keramik und Metall. Insbesondere liegt die Wärmeleitfähigkeit der Materialien um mindestens einen Faktor 10 auseinander, insbesondere um mindestens einen Faktor 100.

Je nach Platzverhältnissen und gewünschtem Beobachtungsbereich im Verbrennungsraum kann der Tubus in einem Winkel auf das Fenster treffen, der 5° bis 30° [Winkelgrad] von der Senkrechten abweicht. So können größere Flammenbereiche beobachtet und/oder der außen an der Brennerklappe verfügbare Platz besser genutzt werden.

Schematische Ausführungsbeispiele der Erfindung, auf die diese jedoch nicht beschränkt ist, werden nun anhand der Zeichnung näher erläutert, wobei gleiche Teile in allen Figuren mit gleichen Bezugszeichen versehen sind. Es stellen dar:
Fig. 1: schematisch einen Verbrennungsraum eines Heizgerätes mit außen liegendem optischem Sensor,
Fig. 2: schematisch und vergrößert einen Längsschnitt durch die Sensoranordnung mit Tubus aus Fig. 1, und
Fig. 3: schematisch den Aufbau eines Tubus für einen Sensor mit unterschiedlicher Wärmeleitfähigkeit in radialer und axialer Richtung.

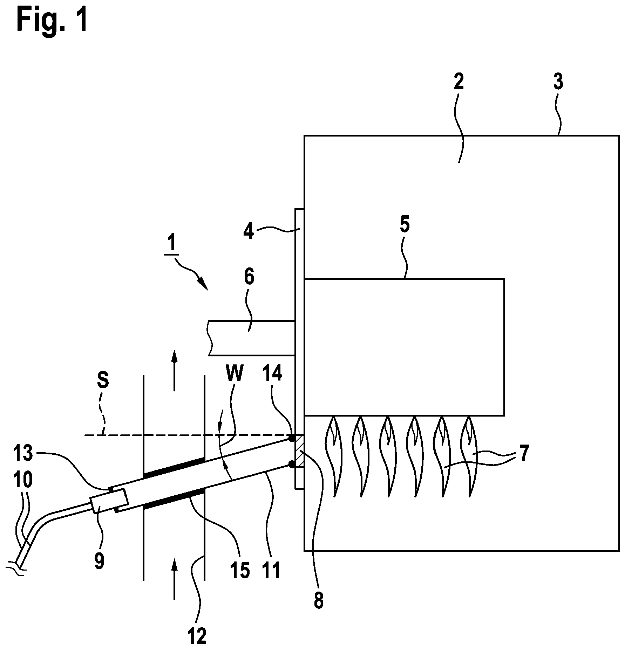

Fig. 1 zeigt schematisch einen Verbrennungsraum 2 eines Heizgerätes 1, welcher von einem Gehäuse 3 umgeben ist. In dem Gehäuse 3 befindet sich eine Brennertür 4 (oder Klappe), an der ein in den Verbrennungsraum 2 ragender Brenner 5 befestigt ist. Dieser Brenner 5 wird über eine Gemischzuleitung 6 mit einem Gemisch aus Luft und Wasserstoff oder wasserstoffhaltigem Brenngas versorgt. Bei der Verbrennung dieses Gemisches, welches beim Betrieb des Heizgerätes 1 aus dem Brenner 5 in den Verbrennungsraum 2 austritt, entstehen Flammen 7, die für das menschliche Auge fast unsichtbar sind, jedenfalls bei reinem Wasserstoff als Brenngas. Trotzdem senden diese Flammen 7 optische Strahlung aus, insbesondere z. B. im ultravioletten Spektralbereich, die mittels eines Sensors 9 beobachtet werden kann. Wegen der hohen Temperaturen in einem Verbrennungsraum 2 ist der Sensor 9 meist außen vor einem Fenster 8 (Schauglas) angeordnet, welches für die zu beobachtende optische Strahlung durchlässig ist. Da sich auch das Fenster 8 und dessen Umgebung auf sehr hoher Temperatur befinden können, wird der Sensor 9 in einem gewissen Abstand A, z. B. 2 cm bis 20 cm, bevorzugt 5 bis 15 cm, vom Fenster 8 angeordnet. Je weiter der Sensor 9 von den Flammen 7 entfernt ist, desto empfindlicher muss er sein, um seine Funktion z. B. als Flammenwächter oder zur Regelung der Verbrennung erfüllen zu können, da die am Sensor 9 eintreffende optische Strahlung mit dem Abstand A abnimmt. Da die Empfindlichkeit nicht beliebig gesteigert werden kann, sind meist kleine Abstände A von wenigen Zentimetern zum Fenster 8 erforderlich. Oft wird der Sensor 9 daher auch mit Luft gekühlt, insbesondere mit Luft, die zur Bildung des zu verbrennenden Gemisches angesaugt wird. Der Sensor 9 kann also in oder nahe zu einer Luftansaugleitung 12 angeordnet sein, damit er in einem zulässigen Temperaturbereich von z. B. unterhalb 70° C bleibt.

Um eine Verschmutzung von Fenster 8 und Sensor 9 auch bei langjähriger Benutzung des Heizgerätes 1 möglichst gering zu halten, ist ein Tubus 11 zwischen Fenster 8 und Sensor 9 angeordnet, durch den die zu beobachtende optische Strahlung verläuft. Der Tubus 11 hat eine Länge, die im Wesentlichen dem Abstand A entspricht oder je nach Art der Befestigung des Sensors 9 etwas größer ist. Der Tubus kann an einem Einlassende 16 vorzugsweise mit einer (temperaturbeständigen) Dichtung 14 an dem Fenster 8 anliegen oder mit einem kleinen Spalt vom Fenster 8 entfernt sein. An oder in einem Auslass-ende 17 des Tubus 11 ist der Sensor 9 mit seinen Zuleitungen 10 in einer Sensorhalterung 13 gehaltert. Der Tubus 11 selbst ist vorzugsweise an oder in einer Luftansaugleitung 12 in einer Tubushalterung 15 befestigt und wird von Luft umströmt, die jedoch nicht in sein Inneres gelangen und daher auch nicht optische Flächen des Sensors 9 oder das Fenster 8 verschmutzen kann. Aus Platzgründen oder wegen der Auswahl eines zu beobachtenden Bereiches der Flammen 7 und der Lage des Fensters 8 kann der Tubus 11 gegenüber einer Senkrechten S zur Oberfläche des Fensters 8 um einen Winkel W geneigt sein, z.B. um 5 bis 30 °, bevorzugt 10 bis 20°. Das Einlassende 16 ist dann entsprechend angeschrägt.

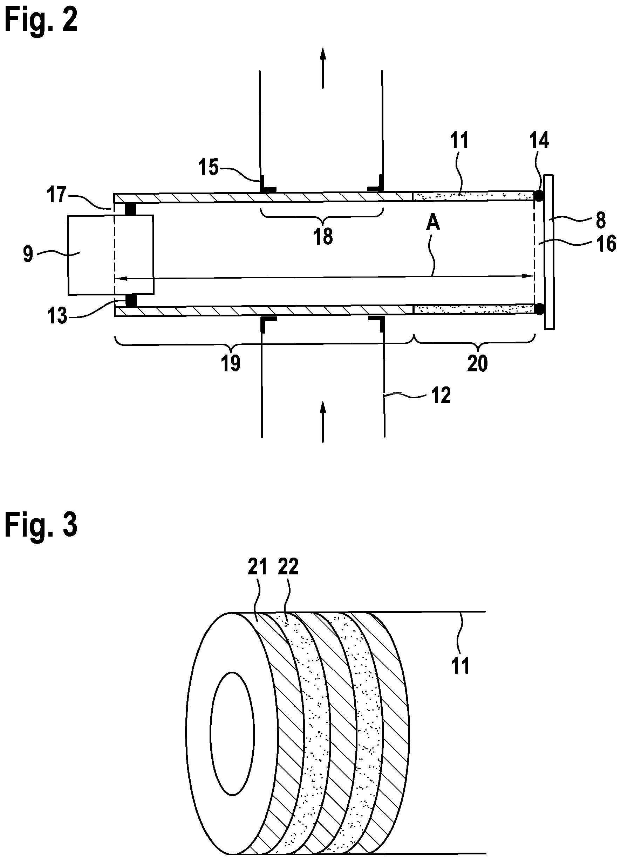

Fig. 2 zeigt einen vergrößerten Ausschnitt aus Fig. 1 mit dem Tubus 11 im Längsaxialschnitt. Da der Tubus 11 einerseits keine Wärme vom Fenster 8 zum Sensor 9 durch Wärmeleitung überträgt, andererseits aber zur Kühlung des Sensors 9 beitragen soll, ist der Tubus 11 in diesem Ausführungsbeispiel aus einem gut wärmeleitenden sensornahen Bereich 19 (z. B. aus Metall) und einem schlecht (oder zumindest schlechter) wärmeleitenden fensternahem Bereich 20 (z. B. aus Keramik) aufgebaut. Der sensornahe Bereich 19 umfasst optional dabei auch einen Teilbereich 18, der in einer Luftansaugleitung 12 verläuft und dadurch gekühlt wird. So wird auch der Sensor 9 gekühlt und nicht vom Fenster 8 her aufgeheizt.

Fig 3 zeigt ein besonderes Ausführungsbeispiel, bei dem der Tubus 11 so aufgebaut ist, dass er zumindest teilweise radial eine höhere Wärmeleitfähigkeit hat als axial. So etwas kann man z. B. erreichen durch einen Aufbau aus Ringscheiben 21, 22, die abwechselnd gut (metallisch) und schlecht (keramisch) wärmeleitend sind. Solche metallischen Ringscheiben 21 und keramischen Ringscheiben 22 lassen sich z. B. mit 3D-Druck in Form eines Tubus 11 herstellen. Sie sind besonders geeignet, wenn der Tubus 11 nicht durch eine Luftströmung gekühlt wird, sondern lediglich Wärme vom Sensor 9 nach außen abgeben soll, ohne Wärme vom Fenster 8 zum Sensor 9 zu leiten.

Die vorliegende Erfindung erlaubt eine seiner Empfindlichkeit entsprechende Anbringung eines optischen Sensors 9 an einem Fenster 8 zu einem Verbrennungsraum bei gleichzeitiger Vermeidung von Verschmutzungen an Fenster 8 und/oder Sensor 9 und bei Einhaltung eines zulässigen Temperaturbereiches des Sensors 9.

### Bezugszeichenliste

- 1: Heizgerät
- 2: Verbrennungsraum
- 3: Gehäuse
- 4: Brennertür
- 5: Brenner
- 6: Gemischzuleitung
- 7: Flammen
- 8: Fenster/Schauglas
- 9: (optischer) Sensor
- 10: Zuleitungen
- 11: Tubus
- 12: Luftansaugleitung
- 13: Sensorhalterung
- 14: Dichtung
- 15: Tubushalterung
- 16: Einlassende
- 17: Auslassende
- 18: Teilbereich (gekühlt)
- 19: Sensornaher Bereich
- 20: Fensternaher Bereich
- 21: Metallische Ringscheibe
- 22: Keramische Ringscheibe
- A: Abstand
- S: Senkrechte
- W: Winkel

## Patentansprüche

1. Heizgerät (2) mit einem Gehäuse (3) eines Verbrennungsraumes (2), wobei in dem Gehäuse (3) ein Fenster (8) zu dem Verbrennungsraum (2) angeordnet ist, und mit einer Anordnung eines optischen Sensors (9) außen an dem Fenster (8), wobei der Sensor (9) mit einem Abstand (A) von dem Fenster (8) angeordnet ist und zwischen Fenster (8) und Sensor (9) ein Tubus (11) vorhanden ist, durch den optische Strahlen vom Fenster (8) zum Sensor (9) gelangen können und wobei der Tubus (11) mit einem Einlassende (16) dichtend an dem Fenster (8) anliegt, **dadurch gekennzeichnet, dass** der Sensor (9) in einem Auslassende (17) des Tubus (11) angeordnet und mit diesem wärmeleitend verbunden ist und der Tubus (11) in einem fensternahen Bereich (20) schlechter wärmeleitend ausgebildet ist als in einem sensornahen Bereich (19).

2. Heizgerät (2) nach Anspruch 1, wobei der sensornahe Bereich (19) wärmeleitend mit dem Sensor (9) verbunden ist.

3. Heizgerät (2) nach Anspruch 1 oder 2, wobei der Tubus (11) im sensornahen Bereich (19) ein Material mit einer Wärmeleitfähigkeit (bei 20°C) von zumindest 40 W/(mK) hat.

4. Heizgerät (2) nach einem der vorhergehenden Ansprüche, wobei der fensternahe Bereich (20) das Einlassende (16) des Tubus (11) umfasst.

5. Heizgerät (2) nach einem der vorhergehenden Ansprüche, wobei der Tubus (11) im fensternahen Bereich (20) mit einem keramischen Werkstoff oder einem hitzebeständigen Kunststoff ausgeführt ist.

6. Heizgerät (2) nach einem der vorhergehenden Ansprüche, wobei dieses eine Luftansaugleitung (12) umfasst und der Tubus (11) in oder an der Luftansaugleitung (12) mittels einer Tubushalterung (15) gehaltert ist, so dass der Tubus (11) zumindest in einem Teilbereich (18), der durch die Luftansaugleitung (12) verläuft, außen von Luft in der Luftansaugleitung (12) umströmbar ist.

7. Heizgerät (2) nach Anspruch 6, wobei der sensornahe Bereich (19) des Tubus (11) auch einen Teilbereich (18) des Tubus (11) umfasst, der in der Luftansaugleitung (12) verläuft.

8. Heizgerät (2) mit einem Gehäuse (3) eines Verbrennungsraumes (2), wobei in dem Gehäuse (3) ein Fenster (8) zu dem Verbrennungsraum (2) angeordnet ist, und mit einer Anordnung eines optischen Sensors (9) außen an dem Fenster (8), wobei der Sensor (9) mit einem Abstand (A) von dem Fenster (8) angeordnet ist und zwischen Fenster (8) und Sensor (9) ein Tubus (11) vorhanden ist, durch den optische Strahlen vom Fenster (8) zum Sensor (9) gelangen können und wobei der Tubus (11) mit einem Einlassende (16) dichtend an dem Fenster (8) anliegt, **dadurch gekennzeichnet, dass** der Tubus (11) in radialer Richtung besser wärmeleitend ist als in axialer Richtung, so dass mittels des Tubus (11) Wärme vom Sensor (9) besser an die radial äußere Umgebung abgegeben als vom Fenster (8) zum Sensor (9) geleitet wird.

9. Heizgerät (2) nach Anspruch 8, wobei der Tubus (11) zumindest in Teilbereichen (19, 20) aus abwechselnden kreisringförmigen Scheiben (21, 22) mit Materialien unterschiedlicher Wärmeleitfähigkeit aufgebaut ist, wobei die Wärmeleitfähigkeiten der Materialien um mindestens einen Faktor 10 auseinanderliegen.

10. Heizgerät (2) nach einem der vorhergehenden Ansprüche, wobei der Tubus (11) in einem Winkel (W) auf das Fenster (8) trifft, der 5° bis 30° von der Senkrechten (S) abweicht.

11. Heizgerät (2) nach einem der vorhergehenden Ansprüche, wobei dieses für die Beheizung von Gebäuden und/oder die Bereitstellung von warmem Wasser mittels Verbrennung eines Wasserstoff enthaltendem Brenngases mit Umgebungsluft eingerichtet ist.

## Claims

1. Heating device (2) having a housing (3) of a combustion chamber (2), wherein in the housing (3) is arranged a window (8) to the combustion chamber (2), and having an arrangement of an optical sensor (9) on the exterior of the window (8), wherein the sensor (9) is arranged at a distance (A) from the window (8) and a tube (11) is present between window (8) and sensor (9) through which optical beams can reach the sensor (9) from the window (8), and wherein the tube (11) rests with an inlet end (16) sealingly against the window (8), **characterised in that** the sensor (9) is arranged in an outlet end (17) of the tube (11) and is connected thereto in a thermally conductive manner and the tube (11) is designed to be less thermally conductive in a region (20) close to the window than in a region (19) close to the sensor.

2. Heating device (2) according to claim 1, wherein the region (19) close to the sensor is connected in a thermally conductive manner to the sensor (9).

3. Heating device (2) according to claim 1 or 2, wherein the tube (11) in the region (19) close to the sensor comprises a material having a thermal conductivity (at 20°C) of at least 40 W/(mK).

4. Heating device (2) according to any of the preceding claims wherein the region (20) close to the window comprises the inlet end (16) of the tube (11).

5. Heating device (2) according to any of the preceding claims, wherein the tube (11) in the region (20) close to the window is designed from a ceramic material or a heat-resistant plastic.

6. Heating device (2) according to any of the preceding claims, wherein said heating device comprises an air intake pipe (12) and the tube (11) is supported in or against the air intake pipe (12) by means of a tube support (15) such that it is possible for air in the air intake pipe (12) to flow around the outside of the tube (11), at least in a partial region (18) which runs through the air intake pipe (12).

7. Heating device (2) according to claim 6, wherein the region (19) of the tube (11) close to the sensor also comprises a partial region (18) of the tube (11) which runs in the air intake pipe (12).

8. Heating device (2) having a housing (3) of a combustion chamber (2), wherein in the housing (3) is arranged a window (8) to the combustion chamber (2), and having an arrangement of an optical sensor (9) on the exterior of the window (8), wherein the sensor (9) is arranged at a distance (A) from the window (8) and a tube (11) is present between window (8) and sensor (9) through which optical beams can reach the sensor (9) from the window (8) and wherein the tube (11) rests with an inlet end (16) sealingly against the window (8), **characterised in that** the tube (11) is more thermally conductive in radial direction than in axial direction, such that by means of the tube (11), heat is better outputted from the sensor (9) to the radially external environment than it is conducted from the window (8) to the sensor (9).

9. Heating device (2) according to claim 8, wherein the tube (11) is constructed at least in partial regions (19, 20) from alternating circular ring-shaped discs (21, 22) comprising materials of different thermal conductivity, wherein the thermal conductivity properties of the materials differ from one another by at least a factor of 10.

10. Heating device (2) according to any of the preceding claims wherein the tube (11) meets the window (8) at an angle (W) which deviates by 5° to 30° from the perpendicular (S).

11. Heating device (2) according to any of the preceding claims, wherein said heating device is designed for heating buildings and/or providing warm water by means of burning a combustion gas containing hydrogen with ambient air.

## Revendications

1. Appareil de chauffage (2) avec un boîtier (3) d'une chambre de combustion (2), dans lequel une fenêtre (8) vers la chambre de combustion (2) est disposée dans le boîtier (3), et avec un agencement d'un capteur optique (9) à l'extérieur au niveau de la fenêtre (8), dans lequel le capteur (9) est disposé à une distance (A) de la fenêtre (8) et un tube (11) est présent entre la fenêtre (8) et le capteur (9), tube à travers lequel des rayons optiques peuvent parvenir de la fenêtre (8) au capteur (9) et dans lequel le tube (11) repose de manière étanche contre la fenêtre (8) avec une extrémité d'entrée (16), **caractérisé en ce que** le capteur (9) est disposé dans une extrémité de sortie (17) du tube (11) et est connecté à celui-ci de manière thermoconductrice et le tube (11) est conçu pour être moins thermoconducteur dans une zone (20) proche de la fenêtre que dans une zone (19) proche du capteur.

2. Appareil de chauffage (2) selon la revendication 1, dans lequel la zone (19) proche du capteur est connectée au capteur (9) de manière thermoconductrice.

3. Appareil de chauffage (2) selon la revendication 1 ou 2, dans lequel le tube (11) dans la zone proche du capteur (19) présente un matériau avec une conductivité thermique (à 20 °C) d'au moins 40 W/(mK).

4. Appareil de chauffage (2) selon l'une quelconque des revendications précédentes, dans lequel la zone proche de la fenêtre (20) comprend l'extrémité d'entrée (16) du tube (11).

5. Appareil de chauffage (2) selon l'une quelconque des revendications précédentes, dans lequel le tube (11) dans la zone proche de la fenêtre (20) est conçu avec un matériau céramique ou un plastique résistant à la chaleur.

6. Appareil de chauffage (2) selon l'une quelconque des revendications précédentes, dans lequel celui-ci comprend une conduite d'aspiration d'air (12) et le tube (11) est maintenu dans ou au niveau de la conduite d'aspiration d'air (12) au moyen d'un support de tube (15), de sorte que le tube (11) peut être entouré extérieurement par de l'air dans la conduite d'aspiration d'air (12) au moins dans une zone partielle (18) qui s'étend à travers la conduite d'aspiration d'air (12).

7. Appareil de chauffage (2) selon la revendication 6, dans lequel la zone (19) du tube (11) proche du capteur comprend également une zone partielle (18) du tube (11) qui s'étend dans la conduite d'aspiration d'air (12).

8. Appareil de chauffage (2) avec un boîtier (3) d'une chambre de combustion (2), dans lequel une fenêtre (8) vers la chambre de combustion (2) est disposée dans le boîtier (3), et avec un agencement d'un capteur optique (9) à l'extérieur sur la fenêtre (8), dans lequel le capteur (9) est disposé à une distance (A) de la fenêtre (8) et un tube (11) est présent entre la fenêtre (8) et le capteur (9), à travers lequel des rayons optiques peuvent parvenir de la fenêtre (8) au capteur (9) et dans lequel le tube (11) repose de manière étanche contre la fenêtre (8) avec une extrémité d'entrée (16), **caractérisé en ce que** le tube (11) est plus thermoconducteur en direction radiale qu'en direction axiale, de sorte qu'au moyen du tube (11), la chaleur est mieux émise depuis le capteur (9) vers l'environnement extérieur radial que de la fenêtre (8) vers le capteur (9).

9. Appareil de chauffage (2) selon la revendication 8, dans lequel le tube (11) est constitué, au moins dans des zones partielles (19, 20), de disques (21, 22) en forme d'anneaux circulaires en alternance avec des matériaux de conductivité thermique différente, dans lequel les conductivités thermiques des matériaux sont séparées d'au moins un facteur 10.

10. Appareil de chauffage (2) selon l'une quelconque des revendications précédentes, dans lequel le tube (11) rencontre la fenêtre (8) selon un angle (W) qui s'écarte de 5° à 30° de la verticale (S).

11. Appareil de chauffage (2) selon l'une quelconque des revendications précédentes, dans lequel celui-ci est configuré pour chauffer des bâtiments et/ou fournir de l'eau chaude par combustion d'un gaz combustible contenant de l'hydrogène avec l'air ambiant.
